# EUROPEAN PATENT APPLICATION

(11) **EP 2 525 249 A1**
(43) Date of publication of application: **21.11.2012**
(21) Application number: 12164236.7
(22) Date of filing: 16.04.2012
(51) Int. Cl.: G02F 1/1333, H05K 5/02

(54) **Thin display device housing**

(30) Priority: 16.05.2011 JP 2011109621
(71) Applicant: Sony Corporation, Tokyo 108-0075 (JP)
(72) Inventor: Takashima, Hidetoshi, Minato-ku, Tokyo 108-0075 (JP); Ito, Hironobu, Minato-ku, Tokyo 108-0075 (JP)
(74) Representative: Robinson, Nigel Alexander Julian

(57) **Abstract**

A display device includes: a base plate (16) being provided on a first side of a display panel (14); a front-face supporting member (11) facing the base plate (16) with the display panel (14) therebetween, having a periphery on an external side with respect to the display panel (14), and being joined to the base plate (16) at part or all of a peripheral portion of the front-face supporting member (11); and a back-face supporting member (19) facing the front-face supporting member (11) with the base plate (16) therebetween, and being joined to both of the front-face supporting member (11) and the base plate (16) at a peripheral portion of the back-face supporting member (19).

## Description

The present technology relates to a display device applicable to a thin display or the like.

In recent years, thin displays often employ liquid crystal panels (LCDs) or plasma display panels (PDPs) as a display panel (for example, see Japanese Unexamined Patent Application Publication No. 2008-58860). On the other hand, as a next-generation display panel, commercialization of self-emitting display panels using organic EL (Electroluminescence) or the like has also been studied.

In the current situation, however, it is difficult to commercialize large display devices of self-emitting type which have a size of 32 inch or more, for example. Unlike liquid crystal panels or the like which are typically contained in a housing together with a backlight unit (BLU) when they are commercialized, self-emitting display panels do not necessitate backlight units. In this sense, self-emitting display panels may reduce the thickness; however, it is difficult to maintain strength as a product, which is an issue in commercialization.

Although the strength may be maintained by fixing a display panel with use of double-sided tapes, adhesive agents, or the like, it is difficult to repair the display panel by removing the double-sided tapes, the adhesive agents, or the like when a problem occurs, and in this method, whole display panel has to be replaced even with a small defect.

It is desirable to provide a display device which does not necessitate fixing or the like by double-sided tapes, adhesive agents, or the like, and whose thickness is reduced while the strength thereof is maintained.

A display device according to at least an example embodiment of the present technology includes: a base plate being provided on a first side of a display panel; a front-face supporting member facing the base plate with the display panel therebetween, having a periphery on an external side with respect to the display panel, and being joined to the base plate at part or all of a peripheral portion of the front-face supporting member; and a back-face supporting member facing the front-face supporting member with the base plate therebetween, and being joined to both of the front-face supporting member and the base plate at a peripheral portion of the back-face supporting member.

In this display device, the base plate is joined to both of the front-face supporting member and the back-face supporting member, and besides the front-face supporting member and the back-face supporting member are joined together. Consequently, the display panel is fixed between the front-face supporting member and the base plate, and between the front-face supporting member and the back-face supporting member integrated with the base plate.

With the display device according to the embodiments of the present technology, the base plate is joined to both of the front-face supporting member and the back-face supporting member, and the front-face supporting member and the back-face supporting member are joined together, so that, even in a case of a display panel whose thickness is reduced, it is possible to support the display panel by the base plate, and also possible to fix the display panel by interposing it between the front-face supporting member and the back-face supporting member. Consequently, it becomes possible to maintain the strength of the display device without using double-sided tapes, adhesive agents, or the like while reducing the thickness the whole device. In particular, the strength is sufficiently maintained even in a case where the base plate and the front-face supporting member are joined at part of the periphery, for example, only at corners.

It is to be understood that both the foregoing general description and the following detailed description are exemplary, and are intended to provide further explanation of the technology as claimed.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:

The accompanying drawings are included to provide a further understanding of the disclosure, and are incorporated in and constitute a part of this specification. The drawings illustrate example embodiments and, together with the specification, serve to explain the principles of the technology.
FIG. 1 is an exploded perspective view showing a configuration of a display device according to a first example embodiment of the present disclosure.
FIGs. 2A and 2B are plan views showing a configuration of the display device illustrated in FIG. 1.
FIG. 3 is a plan view showing a configuration of a display panel illustrated in FIG. 1.
FIG. 4 is a sectional view showing a configuration of a peripheral portion of the display device illustrated in FIG. 1.
FIG. 5 is a sectional view showing a modification of the display device illustrated in FIG. 4.
FIG. 6 is a sectional perspective view showing another modification of the display device illustrated in FIG. 4.
FIGs. 7A and 7B are perspective views showing an assembling procedure of the display device illustrated in FIG. 1.
FIG. 8 is a perspective view showing a procedure continued from FIG. 7.
FIG. 9 is a perspective view showing a procedure continued from FIG. 8.
FIG. 10 is a sectional view showing a configuration of a display device according to modification 1.
FIGs. 11A and 11B are plan views showing a configuration of a graphite sheet of a display device according to modification 2.
FIGs, 12A and 12B are perspective views for explaining attachment of the graphite sheet illustrated in FIGs. 11A and 11B.
FIG. 13 is a sectional view showing a configuration of a display device according to modification 3.
FIGs. 14A and 14B are perspective views showing a configuration of a back-face supporting member of a display device according to a second example embodiment of the present disclosure.
FIG. 15 is a cross-sectional perspective view showing a configuration of a display device assembled with use of the back-face supporting member illustrated in FIGs. 14A and 14B.
FIG. 16 is a cross-sectional perspective view for explaining a joined portion between a front-face supporting member and a back-face supporting member of the display device illustrated in FIG. 1.

Example embodiments of the present technology will be described in detail below with reference to the figures. Description will be given in the following order.
1. First Example Embodiment (display device in which front-face supporting member and back-face supporting member are joined together by screw)
2. Modification 1 (display device provided with transparent plate on display face of display panel)
3. Modification 2 (display device in which graphite sheet is provided with fixing hole)
4. Modification 3 (display device in which gel is provided between graphite sheet and base plate)
5. Second Example Embodiment (display device in which back-face supporting member and front-face supporting member are joined together by hook section of back-face supporting member)

### [First Example Embodiment]

### [Configuration of Display Device 1]

### (General Configuration)

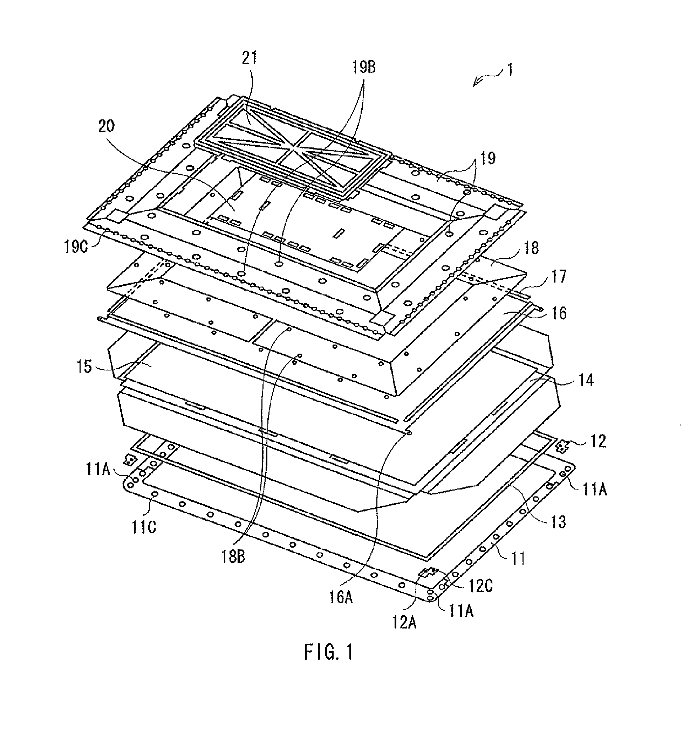

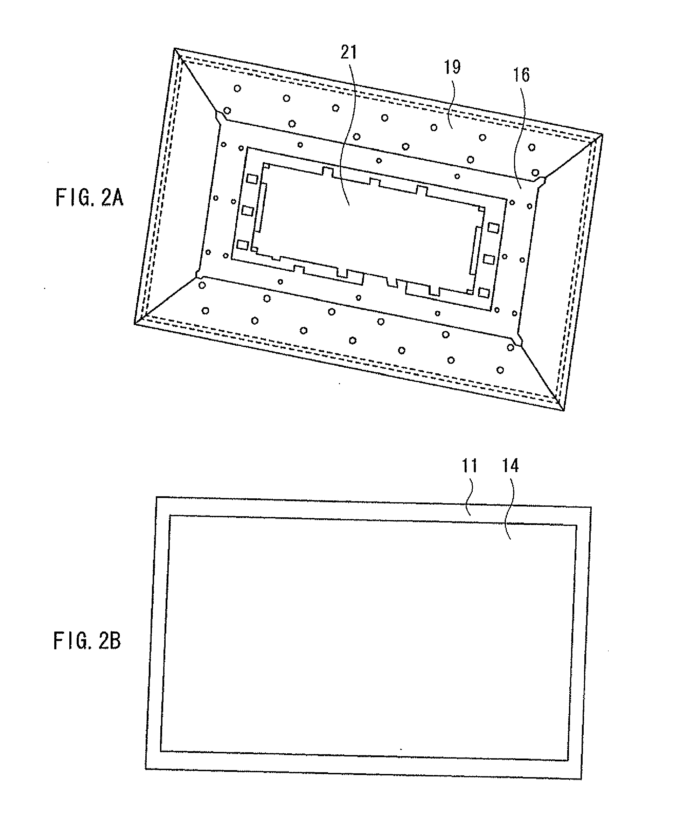

FIG. 1 shows a layer configuration of a display device (display device 1) according to a first example embodiment of the present technology. FIG. 2A is a plan view of the back side of the display device 1, and FIG. 2B is a plan view of the display face side thereof. In the display device 1, a front-face supporting member 11, a panel cushion 13, a display panel 14, a graphite sheet 15, a base plate 16, a heat releasing sheet 17, an insulating sheet 18, and a back-face supporting member 19 are provided in this order of closeness to the display face. Panel guides 12 are disposed at corners of the front-face supporting member 11.

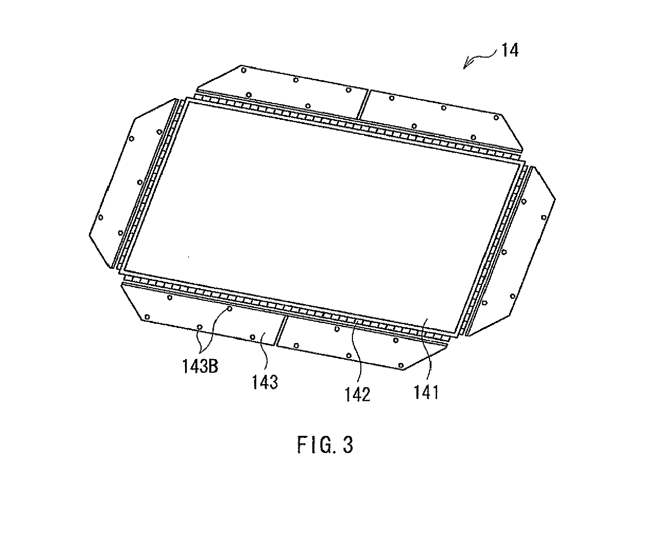

As illustrated in FIG. 3, the display panel 14 is made up of a display cell 141, a COF (chip on film) 142, and a driver substrate 143. The display device 1 of the present embodiment is an organic EL display device, and a plurality of organic EL elements are disposed in the display cell 141.

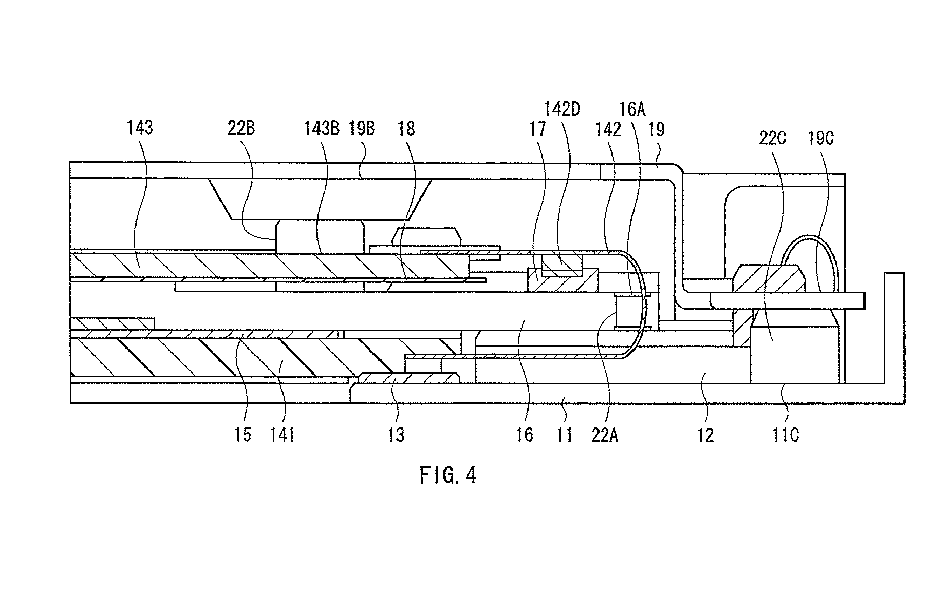

FIG. 4 shows a cross-sectional configuration of a peripheral portion of the display device 1. The driver substrate 143 and the COF 142 connected to the display cell 141 are disposed between the base plate 16 and the back-face supporting member 19 such that the COF 142 and the driver substrate 143 are folded back with the side face of the base plate 16 therebetween.

The front-face supporting member 11 has a frame shape and the center portion thereof is opened, and light emitted by the display panel 14 is taken out from the center portion as it is. Each of the heat releasing sheet 17, the insulating sheet 18, and the back-face supporting member 19 also has a frame shape, and at the center portion (opening portion) thereof, a control IC substrate 20 and a back face cover 21 are provided in this order of closeness to the base plate 16.

In the display device 1, the front-face supporting member 11 and the base plate 16 are screw-fastened together at fastening sections 22A (FIG. 4), and thus the display panel 14 is fixed between the front-face supporting member 11 and the base plate 16. In addition, the base plate 16 and the back-face supporting member 19 are screw-fastened together at fastening sections 22B (FIG. 4), and thus the base plate 16 and the back-face supporting member 19 are fixed together. Further, the front-face supporting member 11 and the back-face supporting member 19 are screw-fastened together at fastening sections 22C (FIG. 4), and thus the display panel 14 and the base plate 16 are fixed between the front-face supporting member 11 and the back-face supporting member 19.

### (Front-face Supporting Member 11, Panel Guide 12, and Panel Cushion 13)

The front-face supporting member 11 faces the back-face supporting member 19 with the display panel 14 therebetween, and has a periphery positioned on the external side with respect to the display panel 14. The front-face supporting member 11 is configured to protect the COF 142 of the display panel 14. The front-face supporting member 11 has a rectangular shape, and a hole 11A (FIG. 1) through which the fastening section 22A is inserted is provided at each of the four corners of the rectangle. Holes 11C through which the fastening sections 22C are inserted are provided at predetermined intervals over the whole circumference (four sides) of the periphery of the front-face supporting member 11. That is, the front-face supporting member I 1 is screw-fastened to the base plate 16 at the fastening sections 22A inserted through the holes 11A disposed at a part (corners) of the peripheral portion, and the front-face supporting member 11 is screw-fastened to the back-face supporting member 19 at the fastening sections 22C inserted through the holes 11C. In the corners, the holes 11 A are disposed on the internal side with respect to the holes 11C. An end portion of the front-face supporting member 11 located on the external side with respect to the hole 11C is erected in an vertical direction (laminating direction) toward the back-face supporting member 19, that is, bent into an L-shape (FIG. 4).

Panel guides 12 are configured to set (positioning) the position of the display panel 14 with respect to the front-face supporting member 11 and hold the position. In the present embodiment, the panel guides 12 are provided on the front-face supporting member 11 side (display face side), and this makes it possible to sequentially assemble the display device 1 in one direction (display face side). In other words, the display device 1 may be assembled without turning the display face side and the back side. The base plate 16 and the front-face supporting member 11, and the back-face supporting member 19 and the front-face supporting member 11 are joined together through holes 12A and 12C of the panel guide 12, respectively.

The panel cushion 13 is configured to protect the display panel 14, and is provided between the display panel 14 and the front-face supporting member 11 (the panel guide 12) (FIG. 4). When a shock is applied to the display device 1, this panel cushion 13 prevents the end portion of the display panel 14 and the front-face supporting member 11 or the panel guide 12 from being directly in contact with each other to damage the display panel 14.

### (Display Panel 14)

In the organic EL elements of the display cell 141, a first electrode, an organic layer including a light emitting layer, and a second electrode are laminated in this order. For example, in the display cell 141, a red organic EL element having a red light emitting layer, a green organic EL element having a green light emitting layer, and a blue organic EL element having a blue light emitting layer are disposed in matrix. The number of pixels of the display cell 141 is, for example, 2k4k or FHD (Full High Definition), and size thereof is 32 to 100 inches, and the display device 1 is a high-definition (high resolution) display device having a large size.

In the COF 142, a driver IC 142D (FIG. 4) is mounted on a flexible printed wiring circuit (FPC). This COF 142 is electrically connected to the display cell 141, and a signal from the driver IC 142D is supplied to the display cell 141. The driver IC 142D is provided between the back side face (the face opposing the back-face supporting member) of the base plate 16 and the FPC.

Since the display device 1 (the display cell 141) is a high-definition display device, the COF 142 is connected to peripheral portions (all of the side portions between the corners) except for the corners of the display cell 141 as illustrated in FIG. 3. When viewed in plan, in these peripheral portions, the COF 142 is protruded from the display cell 141 toward the outside, and the display cell 141 is fixed only at the corners. That is, the display panel 14 is held, between the front-face supporting member 11 and the base plate 16, by the holes 11A (the fastening sections 22A) provided at the four corners of the front-face supporting member 11.

The driver substrate 143 is electrically connected to the COF 142, and also electrically connected to the control IC substrate 20. The fastening sections 22B that fasten the base plate 16 to the back-face supporting member 19 are provided so as to penetrate holes 143B provided in the peripheral portion of the driver substrate 143.

### (Graphite Sheet 15)

The graphite sheet 15 is configured to moderate local temperature difference in the display cell 141 and suppresses degradation in image quality such as luminance unevenness caused by temperature difference. The size of the graphite sheet 15 is substantially equal to that of the display cell 141. Depending on heating value, it is possible to allow the base plate 16 to directly release heat, without providing the graphite sheet 15. In that case, the number of components may be decreased to achieve cost reduction.

### (Base Plate 16)

The base plate 16 has a thickness of 0.8 to 2.0 mm both inclusive, and is configured by a metal such as an aluminum plate and an iron plate. In addition, the base plate 16 is a rectangular plate larger than the display cell 141, and the periphery thereof is positioned on the internal side with respect to the front-face supporting member 11. The base plate 16 is provided on the back face (one face) side of the display panel 14 to support the display panel 14, and the strength of the display device 1 is mainly maintained by the base plate 16. The base plate 16 also functions as a ground source, maintaining the same potential between the ground of the driver substrate 143 connected to the base plate 16 and the ground of the control IC substrate 20.

Holes 16A are provided at four corners of the base plate 16, and screws are respectively inserted through the holes 16A to screw-fasten the base plate 16 to the front-face supporting member 11. The holes 16A at the four corners are disposed such that they protrude to the external side with respect to the four sides of the base plate 16. In addition, the fastening sections 22B are provided at predetermined intervals over the whole circumference of the peripheral portion of the base plate 16. Screws are respectively inserted through these fastening sections 22B, and thus the base plate 16 is screw-fastened to the back-face supporting member 19 by these screws.

### (Heat Releasing Sheet 17)

The heat releasing sheet 17 is provided between the driver IC 142D and the base plate 16 (FIG. 4) to prevent the temperature of the driver IC 142D from rising. The heat generated in the driver IC 142D is released to the base plate 16 through the heat releasing sheet 17 (first heat releasing sheet).

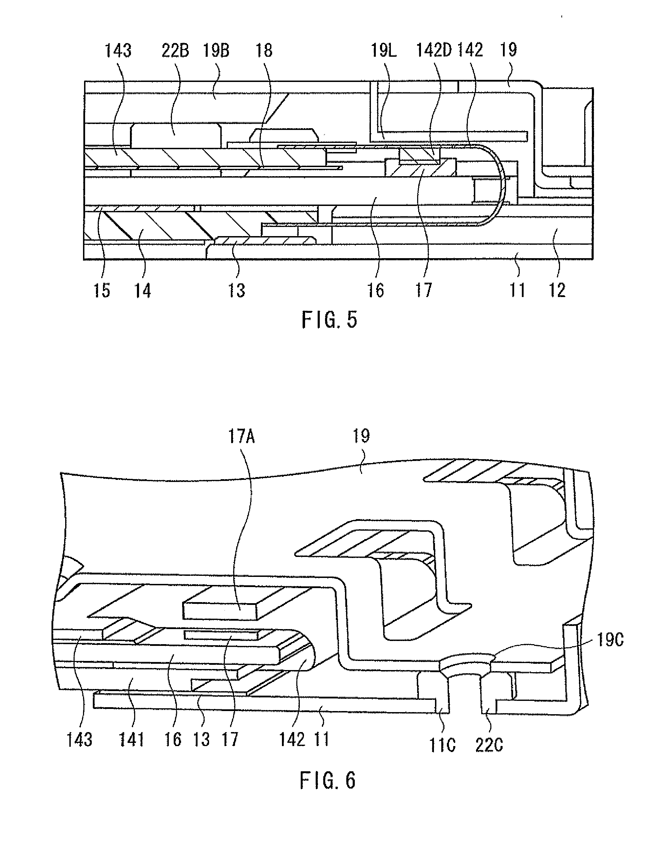

As definition of the display device 1 increases, amount of heatgenerated by the driver IC 142D increases. In order to more effectively release the heat of the driver IC 142D, a portion (flexed portion 19L), which is the back-face supporting member 19 flexed into an L-shape toward the base plate 16may be provided at a portion opposite to the driver IC 142D, so as to auxiliary press the driver IC 142D against the heat releasing sheet 17, as illustrated in FIG. 5. In addition, as illustrated in FIG. 6, a heat releasing sheet 17A (second heat releasing sheet) may be provided also between the COF 142 and the back-face supporting member 19 so as to release the heat also to the back-face supporting member 19.

### (Insulating Sheet 18)

The insulating sheet 18 is configured to secure insulation between the driver substrate 143 and the base plate 16. The base plate 16 and the back-face supporting member 19 are fastened together by screws through holes 18B (FIG. 1) provided in the peripheral portion of the insulating sheet 18.

### (Back-face Supporting Member 19)

The back-face supporting member 19 is configured to face the front-face supporting member 11 with the base plate 16 therebetween, to protect the driver substrate 143 from the back side, and to be integrated with the base plate 16 in order to hold the display panel 14 between itself and the front-face supporting member 11. The periphery of the back-face supporting member 19 is located on the internal side with respect to the front-face supporting member 11. Over the whole circumference of the peripheral portion of the back-face supporting member 19, holes 19B through which the fastening sections 22B are inserted and holes 19C through which the fastening sections 22C are inserted are provided at respective intervals determined in advance. The holes 19C are disposed on the external side with respect to the holes 19B. That is, the back-face supporting member 19 is screw-fastened to the base plate 16 at the fastening sections 22B by screws inserted through the holes 19B, and fastened to the front-face supporting member 11 at the fastening sections 22C by screws inserted through the holes 19C.

Toward the front-face supporting member 11, an end portion of the back-face supporting member 19 is bent in the vertical direction and then bent in the horizontal direction in order from the internal side, and thus has an L-shape. On the other hand, an end portion of the front-face supporting member 11 is disposed on the external side with respect to the back-face supporting member 19, and as described above, erected in the vertical direction toward the back-face supporting member 19 to have an L-shape. By bending the end portions of the front-face supporting member 11 and the back-face supporting member 19 into an L-shape as described above, a structure with higher strength may be realized.

### (Control IC Substrate 20 and Back Face Cover 21)

The control IC substrate 20 is disposed at the center portion of the frame-shaped insulating sheet 18 and back-face supporting member 19, and in contact with the base plate 16. The control IC substrate 20 has a microcomputer or the like, and supplies a signal to the display panel 14 through the driver substrate 143 electrically connected to the control IC substrate 20. The control IC substrate 20 is protected by the back face cover 21 from the back side.

### [Assembling Method of Display Device 1]

For example, the above-mentioned display device 1 is assembled as follows.

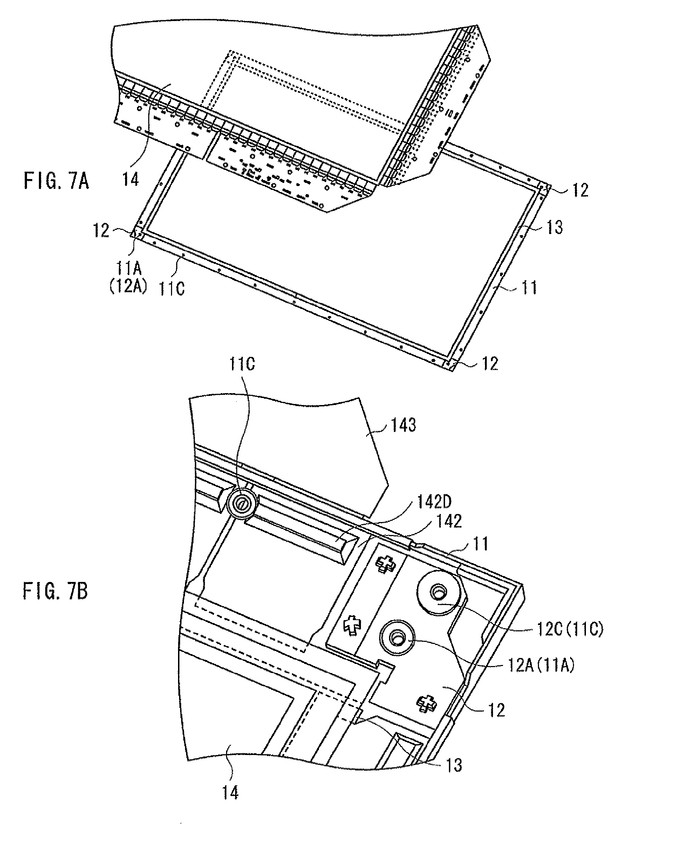

First, as illustrated in FIG. 7A, the panel guides 12 are provided at the four corners of the front-face supporting member 11, and the panel cushion 13 is provided at internal peripheral portion of the front-face supporting member 11. Next, as illustrated in FIG. 7B, the display panel 14 is disposed in accordance with the panel guide 12.

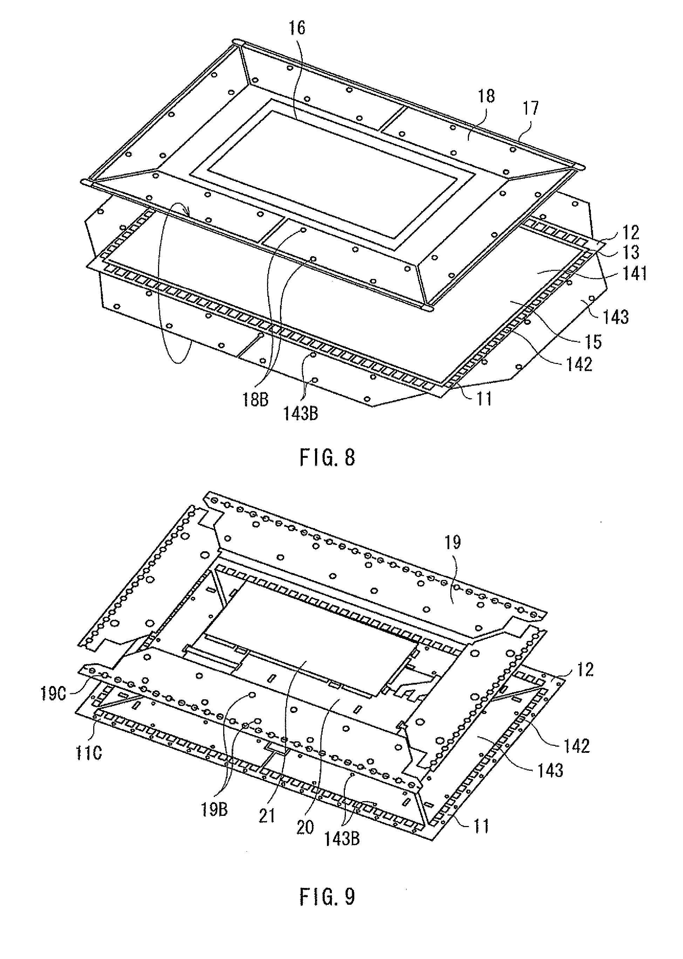

After correctly disposing the display panel 14 by means of the panel guide 12, the graphite sheet 15, the base plate 16, and the insulating sheet 18 are provided on the back face of the display panel 14 in this order as illustrated in FIG. 8. After the base plate 16 is provided, the holes 16A of the base plate 16 and the holes 11A of the front-face supporting member 11 are screw-fastened by screws at the fastening sections 22A. Next, the driver substrate 143 and the COF 142 protruded to the outside from the external periphery of the display cell 141 are folded to the back side with the side face of the base plate 16 therebetween, so as to dispose the driver substrate 143 on the base plate 16 (or on the back side of the base plate 16). At this time, the heat releasing sheet 17 is provided between the driver IC 142D of the COF 142 and the base plate 16.

Then, as illustrated in FIG. 9, the back-face supporting member 19 and the control IC substrate 20 are provided on the back side of the driver substrate 143, and the control IC substrate 20 is electrically connected to the driver substrate 143. Next, the back side of the control IC substrate 20 is protected by the back face cover 21. After the back-face supporting member 19 is provided on the driver substrate 143 disposed on the base plate 16, the holes 19B of the back-face supporting member 19 are screw-fastened to the fastening sections 22B of the base plate 16, and the holes 19C of the back-face supporting member 19 and the holes 11C of the front-face supporting member 11 are screw-fastened together at the fastening section 22C. Finally, a stand or the like (not shown) is mounted, and the display device 1 is completed.

### [Function and Effect of Display Device 1]

In the display device 1, since the base plate 16 is joined to the front-face supporting member 11 and the back-face supporting member 19, and the front-face supporting member 11 and the back-face supporting member 19 are joined together, the display panel 14 is fixed between the front-face supporting member 11 and the base plate 16, and between the front-face supporting member 11 and the back-face supporting member 19 integrated with the base plate 16.

In liquid crystal display device or the like, a backlight unit is typically provided on the back side together with a liquid crystal panel, so that the liquid crystal display device or the like has a certain degree of thickness, and the strength as a display device is maintained. On the other hand, in self-emitting display devices, the backlight unit is unnecessary and accordingly, the thickness may be reduced. However, the strength as a display device is decreased.

Even in self-emitting display devices, the strength may be maintained by fixing a display panel with use of double-sided tapes, adhesive agents, or the like. In this method, however, it is difficult to repair the device by removing the double-sided tapes, the adhesive agents, or the like when a problem occurs, and whole display panel has to be replaced even with a small defect.

In contrast, in the display device 1, the front-face supporting member 11 is joined to the base plate 16 that mainly provides the strength, and the display panel 14 is held between the front-face supporting member 11 and the base plate 16, and also between the back-face supporting member 19 integrated with the base plate 16 and the front-face supporting member 11. Consequently, even in the case of the display panel 14 of a self-emitting type with reduced thickness, it is possible to support the display panel 14 by the base plate 16, and to fix the display panel 14 by interposing it between the front-face supporting member 11 and the back-face supporting member 19.

As described above, in the present embodiment, the base plate 16 is joined to the front-face supporting member 11 and the back-face supporting member 19, and the front-face supporting member 11 and the back-face supporting member 19 are joined together. Consequently, it becomes possible to maintain the strength of the display device 1 without using double-sided tapes while reducing the thickness thereof. For example, the display device 1 is capable of adequately maintaining the strength as a product even when the display panel 14 has a thickness of a few millimeters.

In addition, in the high-definition display panel 14 (the display device 1), the COF 142 is connected to the display cell 141 at the whole circumference except for the corners of the display cell 141, and therefore joining of the front-face supporting member 11 and the base plate 16 may be performed only at the four corners. However, the front-face supporting member 11 is joined, over the whole circumference thereof, to the back-face supporting member 19 integrated with the base plate 16, and therefore, even in the case of the display panel 14 in which the COF 142 is protruded from almost the whole circumference, it is possible to firmly hold the display panel 14. In addition, no gap is formed between the corners of the front-face supporting member I 1 and the back-face supporting member 19.

Now, modifications of the above-mentioned embodiment and another embodiment are described, and in the following description, the same reference numerals are given to those components that are the same as the corresponding components of the above-mentioned embodiment, and description thereof is appropriately omitted.

### [Modification 1]

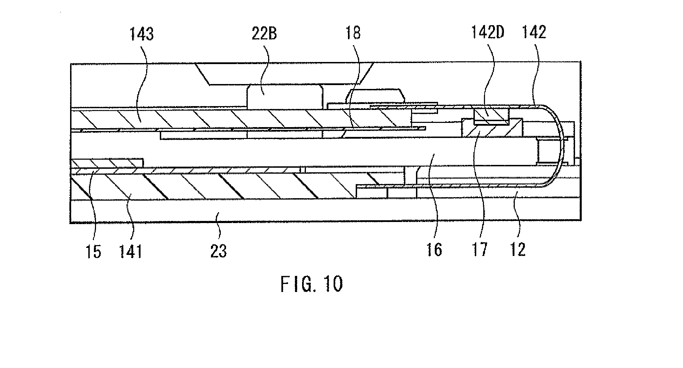

As illustrated in FIG. 10, a transparent plate 23 may be provided on the display face of the display cell 141. The transparent plate 23 is adhered to the display face of the display cell 141 through a transparent bonding resin (not shown). By providing the transparent plate 23, local temperature difference on the display face of the display cell 141 may be moderated, and design is enhanced. Although the graphite sheet 15 has a similar function to the transparent plate 23, the use of the graphite sheet 15 results in cost increase because it is a high-priced material. In view of this, the transparent plate 23 may be used in place of the graphite sheet 15.

### [Modification 2]

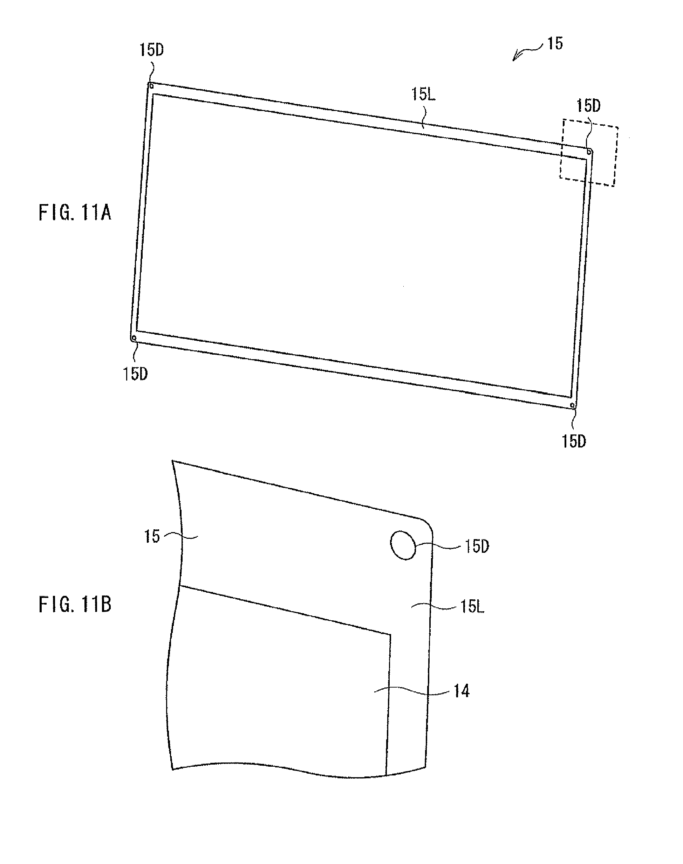

As illustrated in FIG. 11A, in place of the panel guide 12, holes 15D (fixing holes) configured to fix the display panel 14 to a correct position with respect to the front-face supporting member 11 may be provided at four corners of the graphite sheet 15. FIG. 11B is an enlarged view of a region enclosed by a dotted line in FIG. 11A.

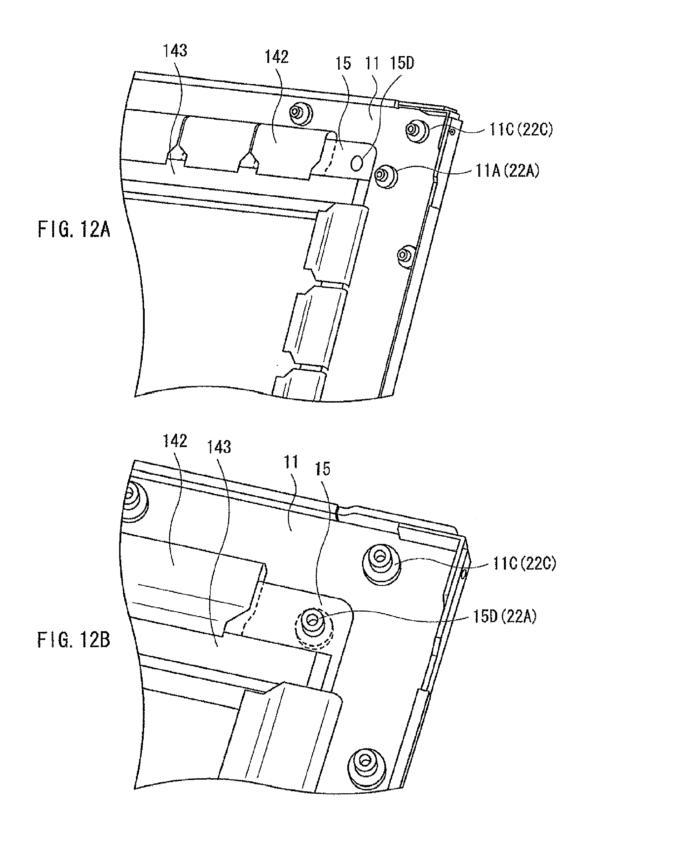

The graphite sheet 15 is prepared by protecting the surface of graphite hardened in a sheet shape with a laminate material. The periphery of the graphite sheet 15 is a laminate region 15L configured only of the laminate material, and the sheet-shaped graphite is not provided in the laminate region 15L. Holes 15D are provided at four corners of the laminate region 15L. As illustrated in FIG. 12A, the graphite sheet 15 and the display panel 14 are integrated by a jig or the like, and as illustrated in FIG. 12B, the graphite sheet 15 and the display panel 14 are disposed at a correct position with respect to the front-face supporting member 11 by the holes 15D.

When the panel guides 12 are provided at the corners of the front-face supporting member 11, a crack may be generated at the corners of the display cell 141 in an exemplary case where a strong shock of falling or the like is applied to the display device 1. When the graphite sheet 15 is provided with the holes 15D for positioning, the panel guide 12 becomes unnecessary, so that it is possible to realize a stable display device 1 while preventing the generation of such a crack. In addition, since it is possible to reduce the number of components, cost reduction is also possible. The holes (holes 15D) for positioning may be provided to components other than the graphite sheet 15 if the components may be integrated with the display panel 14.

### [Modification 3]

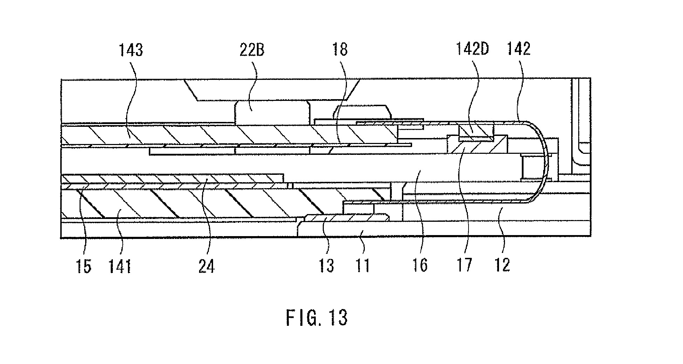

As illustrated in FIG. 13, a gel layer 24 adhered between the graphite sheet 15 and the base plate 16 may be provided. With the gel layer 24, heat produced by the display cell 141 is easily released to the base plate 16. In addition, the gel layer 24 prevents the graphite sheet 15 and the base plate 16 from being slid and displaced from a correct position. The gel layer 24 is made of silicone grease or the like, for example.

### [Second Example Embodiment]

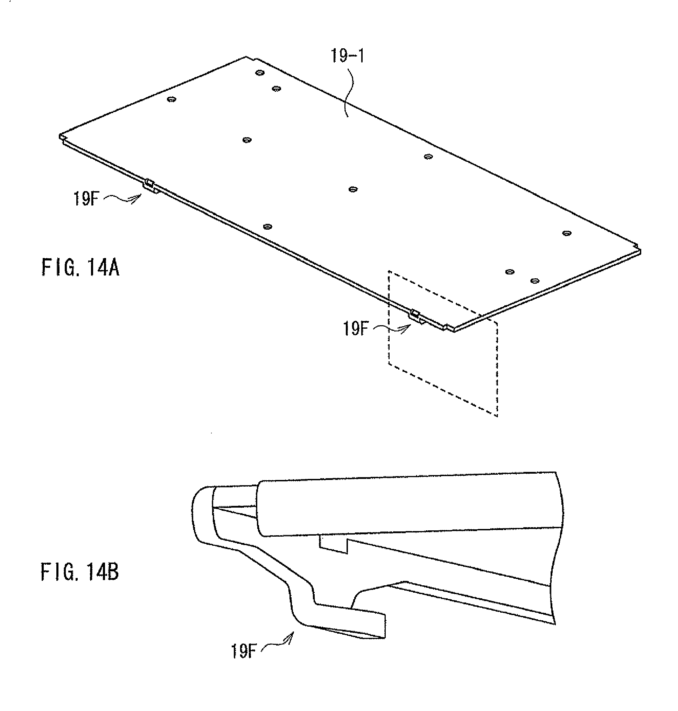

FIG. 14A and FIG. 14B shows a configuration of a back-face supporting member (back-face supporting member 19-1) of a display device (display device 2) according to a second example embodiment of the present disclosure. FIG. 14B is an enlarged view showing a region enclosed by a dotted line in FIG. 14A. The back-face supporting member 19-1 has a rectangular-plate shape, and hook sections 19F are provided at the periphery thereof. In this instance, while two hook sections 19F are provided at a long side of the rectangular shape, the number and position of the hook section 19F is not limited to this. Except for that point, this display device has a similar configuration as the display device 1 of the above-mentioned embodiment, and the function and effect thereof are also similar to the display device 1 of the above-mentioned embodiment.

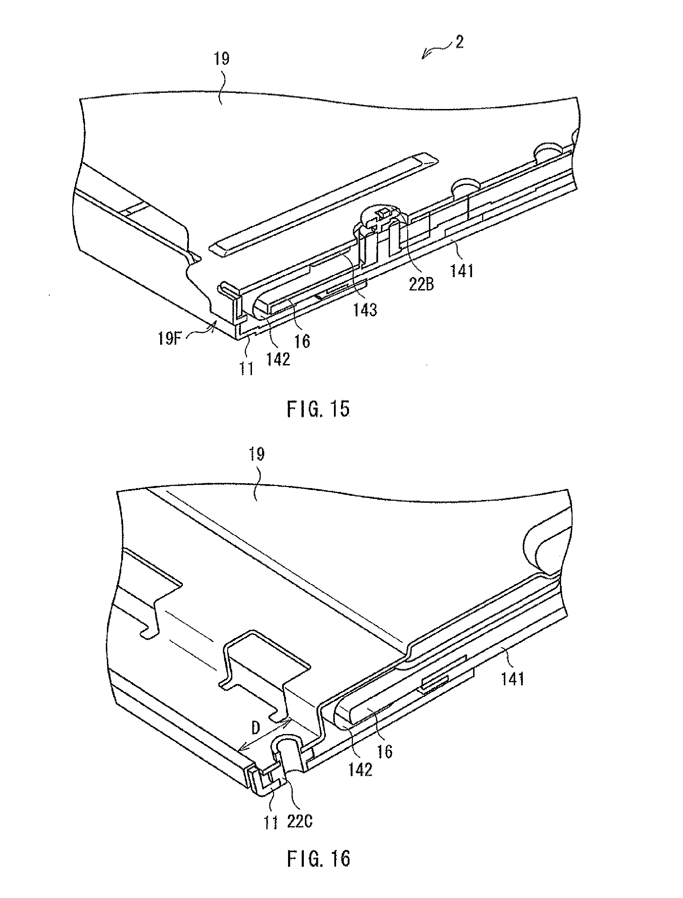

The hook section 19F has a hook-like shape in which part of the end portion of the back-face supporting member 19-1 is flexed in the vertical direction and then in the horizontal direction in order from the internal side toward the front-face supporting member 11. With the hook section 19F, as illustrated in FIG. 15, it is possible to join the back-face supporting member 19-1 and the front-face supporting member 11 together without using the fastening section 22C.

FIG. 16 shows a joined portion between the back-face supporting member 19 and the front-face supporting member 11 of the above-mentioned first embodiment. Since the back-face supporting member 19 is joined to the front-face supporting member 11 by screws, regions D in which the screws are provided are needed. On the other hand, since the back-face supporting member 19-1 does not necessitate the regions D, it is possible to narrow the frame of the display device 1 and obtain greater design freedom. In addition, it is possible to decrease the number of screws to be used.

While the present technology has been described above referring to the embodiments and the modifications, the present technology is not limited to the above-mentioned embodiment and so forth, and various modifications may be made. For example, while an organic EL display device is exemplified as the display device 1 in the above-mentioned embodiments and so forth, the the present technology may be applicable to other display devices such as inorganic EL display devices and liquid crystal display apparatuses.

In addition, the form of the front-face supporting member 11 and the back-face supporting member 19 is not limited to the frame shape, and the center portion thereof may not necessarily be opened.

It is possible to achieve at least the following configurations from the above-described example embodiments and the modifications of the disclosure.
(1) A display device including:
   a base plate being provided on a first side of a display panel;
   a front-face supporting member facing the base plate with the display panel therebetween, having a periphery on an external side with respect to the display panel, and being joined to the base plate at part or all of a peripheral portion of the front-face supporting member; and
   a back-face supporting member facing the front-face supporting member with the base plate therebetween, and being joined to both of the front-face supporting member and the base plate at a peripheral portion of the back-face supporting member.
(2) The display device according to (1), wherein
   the back-face supporting member is joined to both of the front-face supporting member and the base plate at a whole circumference thereof, and
   the front-face supporting member and the base plate are joined together at respective corners thereof.
(3) The display device according to (1) or (2), wherein a chip on film (COF) is connected to the display panel at portions other than corners of the display panel.
(4) The display device according to (3), wherein
   the COF is provided to extend from the display panel to a position between the base plate and the back-face supporting member with an end face of the base plate therebetween, the COF including a driver IC, and
   a first heat releasing sheet being in contact with the driver IC is provided between the driver IC and the base plate.
(5) The display device according to (4), wherein a second heat releasing sheet being in contact with the COF is provided between the back-face supporting member and the COF.
(6) The display device according to any one of (1) to (5), including:
   a graphite sheet between the base plate and the display panel, wherein
   a fixing hole allowing the graphite sheet to be fixed to the front-face supporting member is provided at corners of the graphite sheet.
(7) The display device according to any one of (1) to (6), wherein the front-face supporting member and the back-face supporting member are joined together by screws.
(8) The display device according to any one of (1) to (7), wherein the back-face supporting member includes a hook section at an end portion thereof, and is joined to the front-face supporting member by the hook section.
(9) The display device according to any one of (1) to (8), wherein a transparent plate is adhered to a second face of the display panel with a bonding resin therebetween.
(10) The display device according to any one of (1) to (9) including:
   a graphite sheet between the base plate and the display panel; and
   a gel layer between the graphite sheet and the base plate.

The present disclosure contains subject matter related to that disclosed in Japanese Priority Patent Application JP 2011-109621 filed in the Japan Patent Office on May 16, 2011, the entire content of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It should be understood by those skilled in the art that various modifications, combinations, subcombinations and alterations may occur depending on design requirements and other factors insofar as they are within the scope of the appended claims or the equivalents thereof.

## Claims

1. A display device comprising:
a base plate being provided on a first side of a display panel;
a front-face supporting member facing the base plate with the display panel therebetween, having a periphery on an external side with respect to the display panel, and being joined to the base plate at part or all of a peripheral portion of the front-face supporting member; and
a back-face supporting member facing the front-face supporting member with the base plate therebetween, and being joined to both of the front-face supporting member and the base plate at a peripheral portion of the back-face supporting member.

2. The display device according to claim 1, wherein
the back-face supporting member is joined to both of the front-face supporting member and the base plate at a whole circumference thereof, and
the front-face supporting member and the base plate are joined together at respective corners thereof.

3. The display device according to claim 2, wherein a chip on film (COF) is connected to the display panel at portions other than corners of the display panel.

4. The display device according to claim 3, wherein
the COF is provided to extend from the display panel to a position between the base plate and the back-face supporting member with an end face of the base plate therebetween, the COF including a driver IC, and
a first heat releasing sheet being in contact with the driver IC is provided between the driver IC and the base plate.

5. The display device according to claim 4, wherein a second heat releasing sheet being in contact with the COF is provided between the back-face supporting member and the COF.

6. The display device according to claim 1 comprising:
a graphite sheet between the base plate and the display panel, wherein
a fixing hole allowing the graphite sheet to be fixed to the front-face supporting member is provided at corners of the graphite sheet.

7. The display device according to claim 1, wherein the front-face supporting member and the back-face supporting member are joined together by screws.

8. The display device according to claim 1, wherein the back-face supporting member includes a hook section at an end portion thereof, and is joined to the front-face supporting member by the hook section.

9. The display device according to claim 1, wherein a transparent plate is adhered to a second face of the display panel with a bonding resin therebetween.

10. The display device according to claims 1 comprising:
a graphite sheet between the base plate and the display panel; and
a gel layer between the graphite sheet and the base plate.
